Europäisches Patentamt

**European Patent Office**

Office européen des brevets

(11) Veröffentlichungsnummer: **0 244 492**
**B1**

(12) **EUROPÄISCHE PATENTSCHRIFT**

(45) Veröffentlichungstag der Patentschrift:
**08.08.90**

(21) Anmeldenummer: **86105999.6**

(22) Anmeldetag: **01.05.86**

(51) Int. Cl.⁵: **B31F 1/07**

(54) Maschine zur Oberflächenbehandlung durchlaufender Warenbahnen, insbesondere zum Prägen von Mustern.

(43) Veröffentlichungstag der Anmeldung:
**11.11.87 Patentblatt 87/46**

(45) Bekanntmachung des Hinweises auf die Patenterteilung:
**08.08.90 Patentblatt 90/32**

(84) Benannte Vertragsstaaten:
**AT BE CH DE FR GB IT LI LU NL SE**

(56) Entgegenhaltungen:
**EP-A- 0 028 481**
**GB-A- 493 249**
**GB-A- 2 114 929**
**US-A- 2 681 611**

(73) Patentinhaber: **Jean Hiedemann GmbH & Co.KG,
Köhlstrasse 10, D-5000 Köln 30(DE)**

(72) Erfinder: **Hiedemann, Hans Joachim, Dipl.-Ing.,
Peter-Kintgen-Strasse 6, D-5000 Köln 41(DE)**

(74) Vertreter: **Köhne, Friedrich, Dipl.-Ing.,
Rondorferstrasse 5a, D-5000 Köln 51 (Marienburg)(DE)**

ACTORUM AG

## Beschreibung

Die Erfindung bezieht sich auf eine Maschine zur Oberflächenbehandlung durchlaufender Warenbahnen, insbesondere zum Prägen von Mustern in die Warenbahnen.

Maschinen der vorgenannten Art, die in der Praxis auch als Prägewerke oder in Sonderausführungen auch als Prägekalander bezeichnet werden, sind in den verschiedensten Bauausführungen bekannt. Vielfach stehen diese Maschinen zusammen mit einer Reihe von anderen Bearbeitungsmaschinen in einer Fertigungsstraße, und zwar wenn es ums Prägen von Mustern in den Warenbahnen geht, stehen diese Maschinen nach dem Ende der Verarbeitungslinie oder Fertigungsstraße hin, wo die zu behandelnde Warenbahn nicht nur materialmäßig, sondern auch durch die vielfachen Behandlungsschritte zu einem hochwertigen Produkt geworden ist. Es muß daher vor allem der Prägevorgang mit äußerster Präzision vorgenommen werden, um irgendwelchen Ausschuß zu vermeiden.

Bei den bisher auf dem Markt befindlichen bekannten Maschinen war das Maschinenoberteil fest und unlösbar mit dem Maschinenuntergestell verbunden. Daraus folgt der wesentliche Nachteil, daß ein Walzenwechsel, der aus den verschiedensten Gründen immer wieder erforderlich ist, z. B. bei Umstellung auf ein anderes Prägemuster oder auf ein anderes Material, an Ort und Stelle durchgeführt werden mußte. Infolgedessen mußte die gesamte Verarbeitungslinie bzw. Fertigungsstraße für mehrere Stunden stillgesetzt werden. Wegen der hohen Investitionskosten können derartige Verarbeitungslinien aber nur kurze Stillstandszeiten vertragen. Auch bei einzeln arbeitenden Maschinen oder bei kleinen Anlagen bedeutete es einen großen Zeit- und Arbeitsaufwand, bei häufigem Musterwechsel jeweils die Walzen aus- und einzubauen.

Bei an sich bekannten sogenannten Unionwalzen ergibt sich noch das Problem des genauen Ausrichtens der beiden Walzen zueinander. Im Gegensatz zu den in der Fachwelt bekannten sogenannten Papierwalzen weisen die Unionwalzen einerseits eine positive und andererseits eine negative Prägung auf, wobei die Walzen aber so präzise zueinander eingestellt werden müssen, daß die beiden Prägungen genau aufeinander passen. Dieses genaue Einstellen läßt sich aber praktisch nur im Herstellerwerk, nicht aber im Verarbeitungsbetrieb durchführen, es sei denn, daß ein Spezialfacharbeiter hinzugezogen wird und diese Arbeiten ausführt. Dieses bedeutet nicht nur einen oftmals mehrtägigen Ausfall der Maschine, sondern auch erhebliche Kosten für die Anreise des Facharbeiters, besonders wenn sich die Maschine im fernen Ausland befindet.

Es kommt ein weiteres sehr wesentliches Problem hinzu, nämlich daß die bisher bekannten Maschinen nur jeweils eine ganz bestimmte Walzenbreite aufwiesen, so daß nur Warenbahnen dieser bestimmten Breite bearbeitet werden konnten.

Ferner ist aus dem Dokument GB-A 493 249 eine Maschine bekannt, bei der die Walzen als leicht montierbar und demontierbare Einheit ausgebildet bzw. zusammengefaßt sind, und zwar sind die beiden Walzen in Lagern von zwei gemeinsamen seitlichen Wangen gehalten. Zwischen den beiden Wangen befindet sich ein Sicherheitsrohr, das dem alleinigen Zweck dient zu verhindern, daß ein Bedienungsmann mit den Händen oder Bekleidungsstücken zwischen die beiden Walzen gelangen kann. Desweiteren sind nach oben hin umgebogene, etwa dreieckförmige Bügel vorgesehen, die dazu dienen, die Walzeneinheit aus der Maschine herauszubewegen. Auf Grund des Bewegungsspiels zwischen den beiden seitlichen Zahnrädern läßt sich nicht vermeiden, daß die beiden Walzen trotz der Einheit in Bezug auf ihre Mantellinien gegenseitig verschwenkt bzw. verwunden werden können. Daran ändert auch das Sicherheitsrohr nichts, weil dieses sowohl beim Ausbau der Walzeneinheit als auch beim Einbau und schließlich auch beim Transport auf Torsion beansprucht wird.

Schon allein auf Grund des kleinen Durchmessers dieses Sicherheitsrohres kann es keinerlei Versteifungsfunktionen übernehmen. Da das Sicherheitsrohr beim Walzenwechsel herausgenommen werden muß, ist es an seinen Enden an den Seitengestellen lösbar befestigt, so daß sich auch deshalb keine aussteifende Wirkung ergibt. Auch die vorgenannten Bügel können sich auf Grund ihrer Formgestaltung bei der Handhabung der Walzeneinheit leicht verbiegen. Das bedeutet letztlich, daß es in der Praxis nichts nützt, wenn man die beiden Walzen der Walzeneinheit vor dem Einsatz in der Maschine präzise zueinander einstellt, denn während des Transportes der Walzeneinheit zur Maschine und während des Einsetzens in die Maschine können sich die Walzen so gegeneinander verwinden und verstellen, daß erst nach dem Einsetzen und Festspannen ein genaueres Zuordnen der Walzen zueinander erfolgen muß. Gerade diese Arbeiten nehmen aber einen sehr langen Zeitraum für einen Spezialarbeiter in Anspruch. Auf Grund dieser bekannten Gesamtkonstruktion ist es in der Praxis sehr schwierig, die sehr schwere Walzeneinheit waagerecht in die vorhandene Schwalbenschwanzführung bzw. eine sonstige Nutenführung von der Seite her einzuschieben, besonders wenn es auf höchste Präzision ankommt. Dies gilt auch für die schwenkbaren Haltebügel, die vorhandenen Feststellschrauben und der Spannbügel. Der Anpreßdruck der beiden Walzen zueinander wird auf die oberste Walze ausgeübt, und zwar mittels handbetätigter vertikaler Spindeln. Auch hierdurch ist eine präzise Druckeinstellung einerseits und Ausrichtung der Walzen zueinander nicht möglich, zumindest wenn es um Genauigkeiten geht, die in dem Bereich von tausendstel Millimetern reicht, wie sie bei heutigen modernen Maschinen gefordert werden. Aus den zuvor dargelegten Gründen sind nach dem Einsetzen der Walzeneinheit in die Maschine Probeläufe und Nachstellarbeiten mit hohem Zeitaufwand unumgänglich.

Der Erfindung liegt demgegenüber die Aufgabe zu Grunde, eine Maschine zu schaffen, bei der nicht nur die Walzeneinheit leicht aus- und eingebaut werden kann, sondern bei der die langwierigen, äußerst schwierigen und präzisen Einstellarbeiten der Walzen zueinander außerhalb der eigentlichen Maschine ausgeführt werden können, wobei aber das Walzenwechseln in kürzester Zeit durchgeführt werden kann, ohne den Betrieb der Gesamtanlage nennenswert zu stören und ohne Probeläufe oder Nachstellarbeiten nach dem Einsetzen der Walzeneinheit durchführen zu müssen.

Die gestellte Aufgabe wird gelöst durch die Merkmale des Patentanspruches 1.

Auf diese Weise ergibt sich der Vorteil, daß man die von der Maschine gelösten Kassetten in aller Ruhe für den Einsatz vorbereiten kann, daß man z. B. den Walzenwechsel in der nicht im Einsatz befindlichen Kassette durchführen kann. Entsprechende Kassetten mit Unionwalzen können im Herstellerwerk genau eingerichtet werden. Ferner können auf diese Weise Kassetten mit unterschiedlich breiten Walzen auf Vorrat bereitgestellt werden. Da alle kostspieligen Bauteile, nämlich die hydraulischen oder gegebenenfalls pneumatischen Vorrichtungen und der gesamte Antrieb im Maschinenuntergestell untergebracht sind, erfordern die Kassetten nur einen geringen Bauaufwand.

Vorteilhafte Ausgestaltungen der Erfindung ergeben sich aus den Unteransprüchen.

In der Zeichnung ist ein Ausführungsbeispiel der erfindungsgemäßen Maschine im Schema dargestellt und zwar zeigen

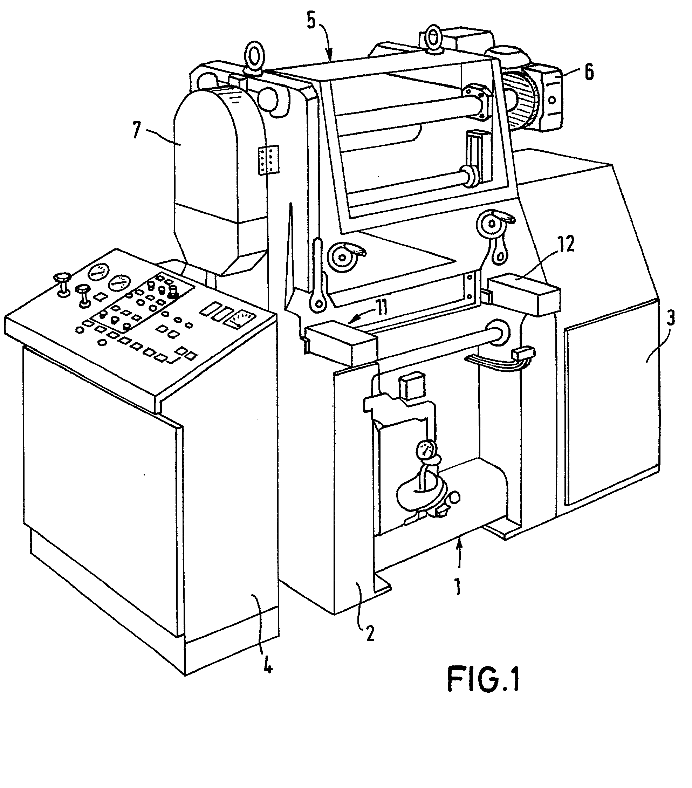

Figur 1 eine perspektivische Darstellung einer Maschine in Betriebsstellung,

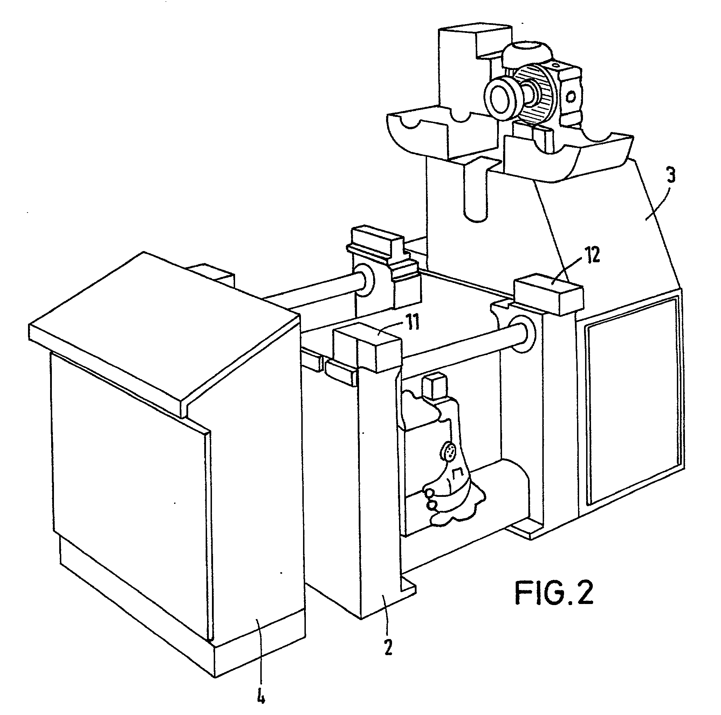

Figur 2 eine perspektivische Darstellung gemäß Figur 1, wobei jedoch die Kassette mit den Walzen abgenommen ist,

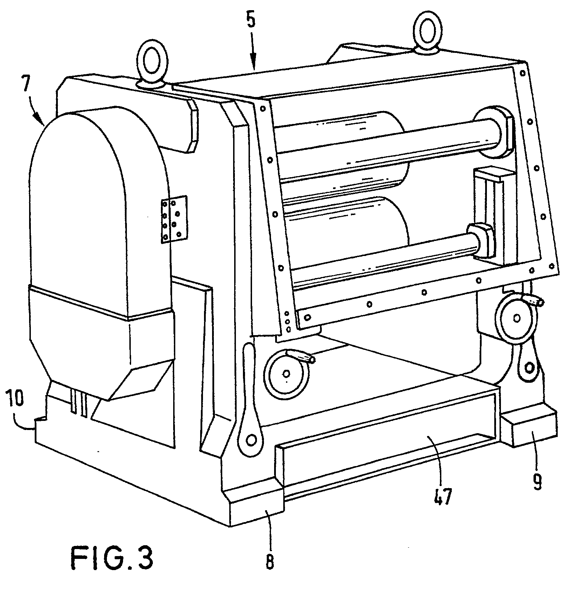

Figur 3 eine perspektivische Darstellung einer einzelnen Kassette,

Figur 4 eine Seitenansicht teils im Schnitt, wobei Verkleidungen abgenommen sind,

Figur 5 eine Stirnansicht in vereinfachter Darstellung und

Figur 6 eine Draufsicht auf die Maschine, ebenfalls zum Teil vereinfacht.

Die in der Zeichnung als Ausführungsbeispiel dargestellte Maschine 1 besteht im wesentlichen aus einem Maschinenuntergestell 2 mit einer fest hiermit verbundenen Antriebseinheit 3, ferner aus einem Schaltpult 4 und einer Kassette 5, wobei mit dem Bezugszeichen 6 der Antriebseingang für die obere Walze 19 und mit dem Bezugzeichen 7 ein Getriebekasten bezeichnet sind. In dem Maschinenuntergestell 2 sind die hydraulischen oder gegebenenfalls pneumatischen Vorrichtungen untergebracht, die an sich bekannt sind und daher im einzelnen nicht dargestellt sind. Diese Vorrichtungen wirken auf die beiderseitigen Achsenden der Unterwalze 18 ein, die auf diese Weise gegen die in Festlagern gehaltene Oberwalze 19 gepresst wird, wobei der Druck pro Zentimeter Linienpressung bei pneumatischem Betrieb je nach Anwendungsfall etwa zwischen 30 - 100 kN und bei hydraulischem Betrieb zwischen etwa 125 - 200 kN betragen kann.

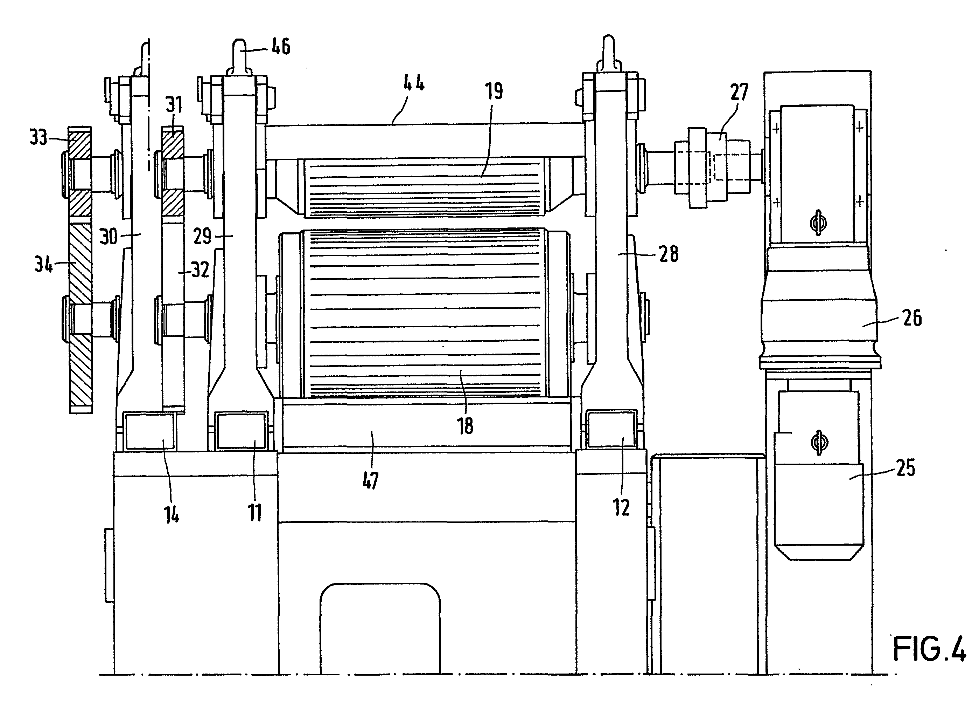

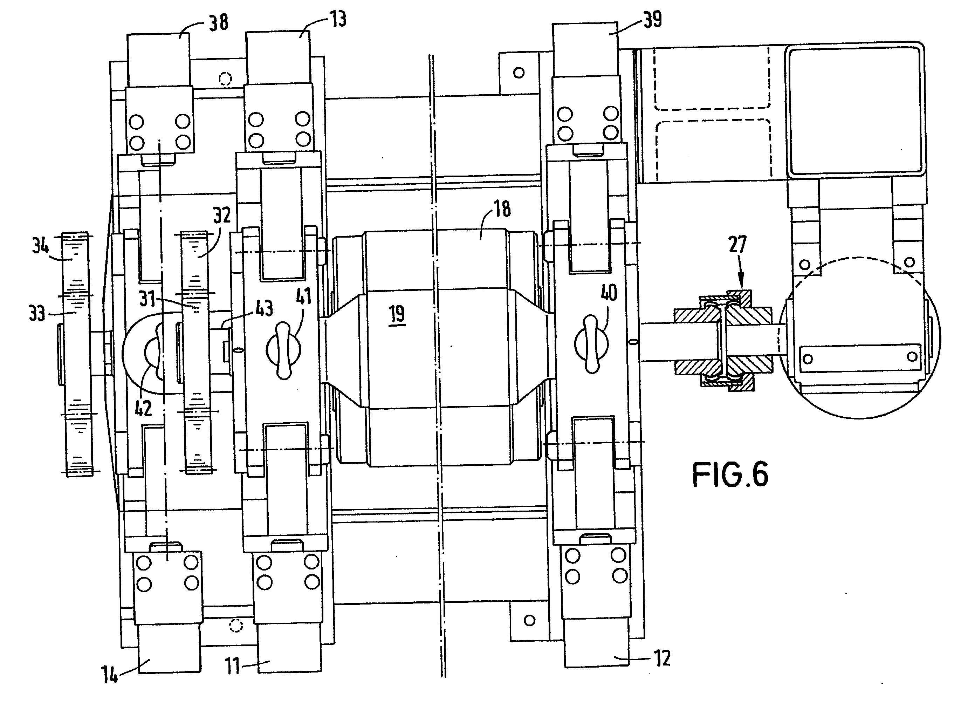

In dem Maschinenuntergestell bzw. der Antriebseinheit 3 ist ferner der gesamte Antrieb untergebracht, und zwar beispielsweise gemäß Figur 4 ein Antriebsmotor 25 mit Zwischengetriebe, Umlenkgetriebe und Kupplungsteil der Kupplung 27, die vorzugsweise als Steckkupplung ausgebildet ist. Die Walzen 18 und 19 sind in einer das Oberteil der Maschine bildenden Kassette 5 gelagert. Diese Kassette 5 ist als leicht montierbare und demontierbare Baueinheit auf dem Maschinenuntergestell 2 angeordnet. Ferner ist das Maschinenuntergestell 2, wie vor allem die Figuren 4 und 6 verdeutlichen, derart ausgebildet, daß unterschiedlich breite Kassetten 5 mit unterschiedlich breiten Walzen 18, 19 befestigbar sind.

Zu diesem Zweck ist die Kassette 5 vorteilhafterweise mittels hydraulischer Spannvorrichtungen 11, 12, 13, 14, 38 und 39 auf dem Maschinenuntergestell 2 lösbar befestigt.

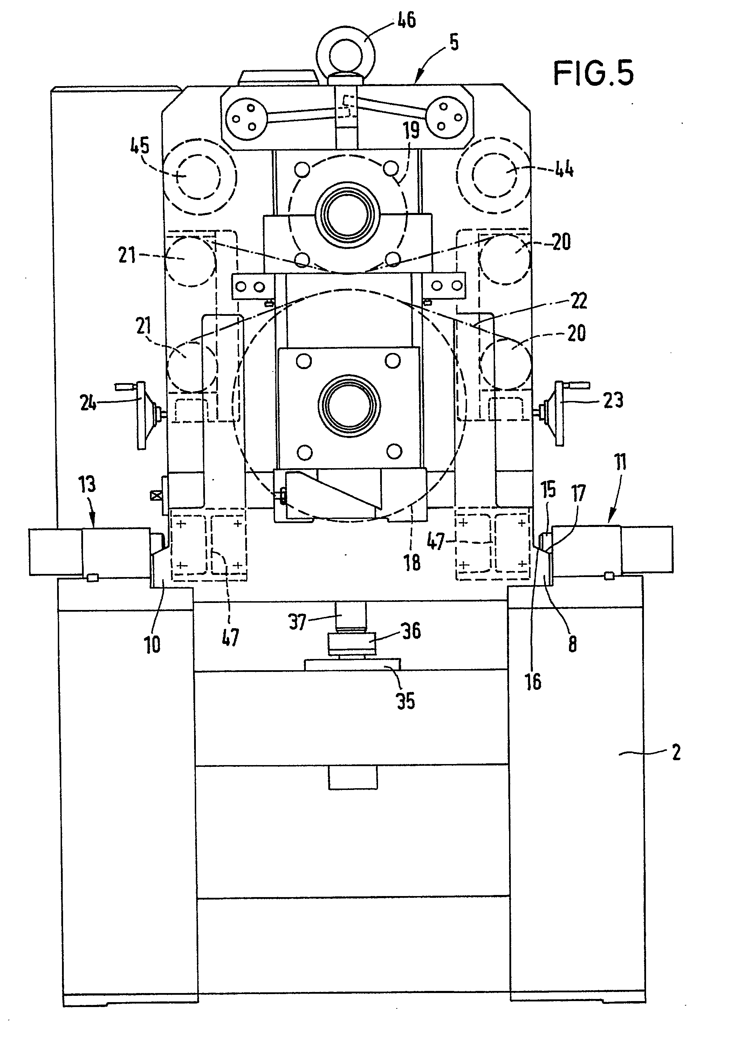

Die Lager der Walzen 18, 19 sind in Walzenständern 28, 29 angeordnet, wenn es sich um Walzen geringer Breite handelt oder in Walzenständern 28 und 30, wenn die Walzen eine große Breite aufweisen. Am unteren Ende der Walzenständer sind beiderseitig Spannfüße vorgesehen, wobei die Spannfüße 8, 9 und 10 zeichnerisch dargestellt sind. Die Kassette weist aber selbstverständlich insgesamt 4 Spannfüße an den unteren Ecken auf. Sie besitzen Schrägflächen 16 (Figur 5), an welchen von oben entsprechende Schrägflächen 17 von jeweiligen Stempeln 15 der hydraulischen Spannvorrichtung 11 - 14, 38 und 39 anliegen.

Wie die Figuren 4 und 6 veranschaulichen, sind an dem Maschinenuntergestell 2 in dem von dem Antrieb bzw. von der Antriebseinheit 3 abliegenden Bereich, also nach der linken Seite zu, zwei Paare von Spannvorrichtungen 11, 13 bzw. 14, 38 mit Abstand voneinander angeordnet, derart, daß der Walzenständer 29 einer Kassette 5 mit kleinster Breite von dem inneren Paar der Spannvorrichtungen 11, 13 gehalten wird. Der Walzenständer 30 einer entsprechend breit ausgeführten Kassette für eine breite Warenbahn wird von dem äußeren Paar der Spannvorrichtungen 14, 38 gehalten. Diese Anordnungsweise ist wichtig, weil die Einspannung der Walzenständer und damit der Kassette zu beiden Seiten jeweils in der Ebene erfolgen muß, in der die hydraulischen oder pneumatischen Vorrichtungen auf die Achsenden der Unterwalze 18 einwirken.

Die Walzen bestehen aus einer Oberwalze 19, die einen verhältnismäßig kleinen Durchmesser aufweist, und einer Unterwalze 18 mit einem verhältnismäßig großen Durchmesser. Das eine Ende der Achse der Oberwalze, nämlich das rechte Ende gemäß Figur 4, ist mit einer Kupplung 27, vorzugsweise einer Steckkupplung, mit dem Antrieb 25, 26 verbunden. Das andere Ende der Achse der Oberwalze 19 trägt je nach Breite der Walzen bzw. der Kassetten ein Zahnrad 31 oder 33. Das Zahnrad 31 greift in ein Zahnrad 32 am entsprechenden Ende der Achse der Unterwalze 18 ein. Bei der breiten Ausführung gemäß Figur 4 greift das Zahnrad 33 an dem Zahnrad 34 an. Durch diese vorerläuterte Konstruktion des Festspannens der Kassette und der Kraftübertragung vom Antrieb auf die beiden Walzen ist es möglich, nach einfachem Lösen der hydraulischen Spannvorrichtungen und Lösen der Kupplung 27 und gegebenenfalls schnell zu lösender weiterer Anschlüsse die gesamte Kassette 5 nach oben abzunehmen und ebenso schnell eine andere Kassette wieder aufzusetzen und zu befestigen.

Im allgemeinen gnügt es, wenn das Maschinenuntergestell 2 so ausgebildet ist, daß zwei Kassetten unterschiedlicher Breite wahlweise befestigt werden können. Es sind dies Breiten, die in der Praxis durch Standardbreiten der Warenbahnen vorgegeben sind. In diesem Falle ist eine besondere Konstruktion von Vorteil, nämlich zwei Hydraulikzylinder, die in Figur 5 mit dem Bezugszeichen 35 versehen sind und die senkrecht zur Bildebene mit Abstand hintereinander liegen, senkrecht zu den Walzen achsen angeordnet sind. Dabei verlaufen die Mittelachsen der Hydraulikzylinder in zwei vertikalen durch die Mitte der zugehörigen Paare der Spannvorrichtungen 11, 13 bzw. 14, 38 hindurchgehenden Ebenen. Auf diese Weise wirkt der innere Hydraulikzylinder auf die Walzenachse bei kleinster Breite der eingesetzten Kassette 5. Wenn eine Kassette mit größter Breite aufgesetzt wird, wirkt der äußere Hydraulikzylinder auf die betreffende Walzenachse der entsprechend breiten Unterwalze 18.

Wenn hingegen mehrere unterschiedliche breite Kassetten verwendet werden sollen und dementsprechend mehrere unterschiedliche Breiten von Walzen und Warenbahnen, kann ein Hydraulikzylinder im linken Teil der Maschine nach Figur 4 und 6 im Maschinenuntergestell 2 angeordnet werden, welcher im Bereich zwischen den beiden durch die Mitte der Spannvorrichtungen 11, 13 bzw. 14, 28 hindurchgehenden Ebenen parallel zu sich verschiebbar angeordnet ist. Dies ist in der Figur 6 im Schema veranschaulicht. Unterhalb des Bereiches, der mit dem Bezugszeichen 40 versehen ist, befindet sich der Kopf der feststehenden Hydraulikvorrichtung. Im linken Teil der Maschine nach Figur 6 befinden sich, wie weiter oben ausgeführt wurde, normalerweise zwei ebenfalls feststehende Hydraulikvorrichtungen mit ihren Köpfen unterhalb der Bereiche, die mit den Bezugszeichen 41 und 42 versehen sind. Statt dessen kann aber auch wie gesagt nur ein Hydraulikzylinder vorgesehen werden, der parallel zu sich mittels verstellbarer Gleitschienen verschiebbar ist, wobei dann der Stempel 36 (Figur 5) durch ein Langloch 43 hindurchragen und entsprechend der Breite der Walze und Kassette angreifen kann.

Eine besonders verwindungssteife Konstruktion der Kassette wird dadurch erreicht, daß die beiderseitigen Walzenständer 28, 29 bzw. 30 am unteren Ende durch einen Rahmen 47, beispielsweise aus doppel T-Profilen, miteinander befestigt sind. Ferner sind am oberen Ende der Walzenständer zwei mit Abstand und parallel zueinander verlaufende Verbindungsstangen 44 und 45 fest angebracht. Weder im Betrieb noch beim Ausheben oder Wiedereinsetzen der Kassette 5, z.B. mittels der Ösen 46 kann es zu irgendwelchen Verwindungen oder Verformungen der Kassette kommen.

Das Austauschen der Kassetten kann auch durch eine Konstruktionseinzelheit erleichtert werden, nämlich dadurch, daß die Hydraulikzylinder 35 unter Zwischenschaltung je eines Stempels 36 und einer in der Kassette 5 gehaltenen und geführten Druckstange 37 auf die jeweiligen Enden der Walzenachse der Unterwalze 18 einwirken. Zum Auswechseln einer Kassette brauchen an diesen Stellen keine Bauteile gelöst zu werden.

Eine vorteilhafte Ausgestaltung der erfindungsgemäßen Maschine besteht noch darin, daß zu beiden Seiten und parrallel und mit Abstand von den Walzen 18, 19 je eine Leitwalze 20, 21 höhenverstellbar angeordnet ist. Das Höheneinstellen der Leitwalzen kann z.B. mittels Handrädern 23, 24 vorgenommen werden. Das Höheneinstellen der Leiträder in bezug auf den Verlauf der Warenbahn 22 (Figur 5) ist besonders wichtig, weil die beispielsweise materialmäßig unterschiedlichen Warenbahnen jeweils eine ganz bestimmte Einstellung der Leitwalzen erfordern. Durch die auswechselbare Gestaltung der Kassetten ist es auch möglich, die genaue Einstellung der Leitwalzen für den jeweiligen Verwendungszweck in Ruhe außerhalb des Betriebes der Kassette vorzunehmen, so daß ein Nachregulieren während des Betriebes entfällt.

Im ausgebauten Zustand der Kassette können neben den Leitrollen auch die Walzen selbst präzise eingestellt werden, insbesondere ist eine Spaltfeineinstellung in bezug auf die jeweilige Warenbahn möglich. Wie aus dem obigen hervorgeht, ist der schnelle Walzenwechsel durch das einfache Austauschen bereits fertig eingestellter verwindungssteifer Kassetten möglich, wobei die neue schon während der Laufzeit der vorhergehenden Kassette mit dem nächsten Walzen satz bestückt werden kann. Es empfiehlt sich, für Unionwalzen und häufig verwandte Walzensätze eigene Kassetten bereitzustellen.

## Patentansprüche

1. Maschine zur Oberflächenbehandlung durchlaufender Warenbahnen, insbesondere zum Prägen von Mustern in die Warenbahnen, mit einem Maschinenoberteil in Form einer Kassette, die aus zwei seitlichen Walzenständern (28, 29; 30) mit übereinander angeordneten Lagern für zwei Walzen (18, 19), einem am unteren Ende der Walzenständer (28, 29; 30) fest verbundenen Rahmen (47) und nach dem oberen Ende zu zwischen den Walzenständern befestigten Verbindungsstangen (44, 45) besteht, sowie mit einem feststehenden Maschinenuntergestell (2), in welchem in den vertikalen Mittelebenen der Walzenständer an den Achslagern der unteren Walze (18) angreifende hydraulische oder pneumatische Vorrichtungen (35) und ein Walzenantrieb (25, 26) angeordnet sind, wobei die Kassette beiderseitiger, am unteren Ende der Walzenständer (28, 29; 30) angebrachter Spannfüße (8, 9, 10) einerseits und drei Paaren von Spannvorrichtungen (11 bis 14, 38, 39 an dem Maschinenuntergestell (2)) für wahlweise unterschiedlich breite Kassetten andererseits lösbar befestigt ist.

2. Maschine nach Anspruch 1, dadurch gekennzeichnet, daß die Spannvorrichtungen (11 bis 14, 38, 39) hydraulisch betätigbar sind.

3. Maschine nach Anspruch 1 oder 2, dadurch gekennzeichnet, daß die Walzen aus einer Oberwalze (19) mit kleinem Durchmesser und einer Unterwalze (18) mit großem Durchmesser bestehen, daß das eine Ende der Oberwalze mittels einer Steckkupplung (27) mit dem Antrieb (25, 26) verbunden ist, und daß das andere Ende der Oberwalze (19) ein Zahnrad (31; 33) trägt, welches in ein Zahnrad (32; 34) am entsprechenden Ende der Achse der Unterwalze (18) eingreift.

4. Maschine nach einem der Ansprüche 1 bis 3, dadurch gekennzeichnet, daß die Spannfüße (8, 9, 10) Schrägflächen (16) aufweisen, und da an diesen Schrägflächen (16) entsprechende Schrägflächen (17) von Stempeln (15) der hydraulischen Spannvorrichtungen (11 bis 14, 38, 39) anliegen.

5. Maschine nach Anspruch 4, dadurch gekennzeichnet, daß an dem Maschinenuntergestell (2) in dem von dem Antrieb (3; 25, 26) abliegenden Bereich zwei Paare von Spannvorrichtungen (11, 13; 14, 38) mit Abstand voneinander angeordnet sind, derart, daß der Walzenständer (29) einer Kassette (5) mit kleinster Breite von dem inneren Paar der Spannvorrichtungen (11, 13) bzw. der Walzenständer (30) einer Kassette (5) mit größter Breite von dem äußeren Paar der Spannvorrichtungen (14, 38) gehalten ist.

6. Maschine nach einem der vorhergehenden Ansprüche, dadurch gekennzeichnet, daß in den beiden vertikalen, durch die Mitte der Paare der Spannvorrichtungen (11, 13; 14, 38) hindurchgehenden Ebenen zwei Hydraulikzylinder (35) senkrecht zu den Walzenachsen angeordnet sind, so daß der innere Hydraulikzylinder auf die Walzenachse bei kleinster Breite der Kassette (5) und der äußere Hydraulikzylinder auf die Walzenachse bei größter Breite der Kassette einwirkt.

7. Maschine nach Anspruch 5, dadurch gekennzeichnet, daß ein Hydraulikzylinder vorgesehen ist, welcher im Bereich zwischen den beiden durch die Mitte der Paare der Spannvorrichtungen (11, 13: 14, 38) hindurchgehenden Ebenen parallel zu sich verschiebbar angeordnet ist.

8. Maschine nach einem der vorhergehenden Ansprüche, dadurch gekennzeichnet, daß zu beiden Seiten und parallel und mit Abstand von den Walzen (18, 19) je eine Leitwalze (20, 21) höhenverstellbar angeordnet ist.

9. Maschine nach Anspruch 6, dadurch gekennzeichnet, daß die Hydraulikzylinder (35) unter Zwischenschaltung je eines Stempels (36) und einer in der Kassette (5) gehaltenen und geführten Druckstange (37) auf die jeweiligen Enden der Walzenachse der Unterwalze (18) einwirken.

**Revendications**

1. Machine pour le traitement de surface de bandes de matières qui les traversent, en particulier pour le gaufrage de patrons dans les bandes de matière, comportant une pièce supérieure de machine en forme de cassette, qui se compose de deux montants de rouleaux (28, 29, 30) comportant des paliers superposés pour deux rouleaux (18, 19), un bâti (47) fixé de façon ferme à l'extrémité inférieure des montants de rouleaux (28, 29, 30) et des barres de liaison (44, 45) fixées entre les montants de rouleaux à la partie supérieure, ainsi qu'un bâti inférieur fixe de machine (2) dans lequel sont disposés un entraînement de rouleaux (25, 26) et des dispositifs hydrauliques ou pneumatiques (35) agissant sur les paliers d'axe du rouleau inférieur (18) dans les plans centraux verticaux des montants de rouleaux, la cassette étant fixées de façon libérale d'une part à l'aide de jambes de force (8, 9, 10) montées des deux côtés sur l'extrémité inférieure des montants de rouleaux (28, 29, 30) et d'autre part au moyen de trois paires de dispositifs de sollicitation (11 à 14, 38, 39) sur le bâti inférieur de machine (2) pour des cassettes de largeurs différentes au choix.

2. Machine selon la revendication 1, caractérisée en ce que les dispositifs de sollicitation (11 à 14, 38, 39) sont actionnables hydrauliquement.

3. Machine selon la revendication 1 ou 2, caractérisée en ce que les rouleaux se composent d'un rouleau supérieur (19) de petit diamètre et d'un rouleau inférieur (18) de grand diamètre, en ce que la première extrémité du rouleau supérieur est reliée en à l'entraînement (25, 26) au moyen d'un accouplement par enfoncement (27) et en ce que l'autre extrémité du rouleau supérieur (19) porte une roue dentée (31, 33) qui s'engrène dans une roue dentée (32, 34) à l'extrémite correspondante de l'axe du rouleau inférieur (18).

4. Machine selon l'une des revendications 1 à 3, caractérisée en ce que les jambes de force (8, 9, 10) présentent des surfaces obliques (16) et que des surfaces obliques correspondantes (17) de poinçons (15) des dispositifs hydrauliques de sollicitation (11 à 14; 38, 39) s'appuient sur ces surfaces obliques (16).

5. Machine selon la revendication 4, caractérisée en ce que, sur le bâti inférieur (2) de machine dans la zone écartée de l'entraînement (3, 25, 26), deux paires de dispositifs de sollicitation (11, 13, 14, 38) sont disposées à distance l'une de l'autre de telle façon que le montant des rouleaux (29) est maintenu sur une cassette (5) de la plus petite largeur par la paire intérieure des dispositifs de sollicitation (11, 13) ou que le montant de rouleau (30) est maintenu sur une cassette (5) de la plus grande largeur par la paire extérieure des dispositifs de sollicitation (14, 38).

6. Machine selon l'une des revendications précédentes, caractérisée en ce que deux vérins hydrauliques sont disposés perpendiculairement aux axes des rouleaux dans les deux plans verticaux passant par le milieu des paires de dispositifs de sollicitation (11, 13, 14, 38) de telle façon que le vérin hydraulique intérieur agisse sur l'axe de rouleau de la cassette (5) de la plus petite largeur et que le vérin hydraulique extérieur agisse sur l'axe de rouleau de la cassette (5) de la plus grande largeur.

7. Machine selon la revendication 5, caractérisée en ce qu'un vérin hydraulique pouvant coulisser parallèlement à lui-même est disposé dans la zone comprise entre les deux plans passant par le milieu des paires de dispositifs de sollicitation (13, 14, 38).

8. Machine selon l'une des revendications précédentes, caractérisée en ce que, sur chacun des côtés, un rouleau de guidage (20, 21) est disposé d'une manière réglable en hauteur, parallèlement aux rouleaux (18, 19) et à distance de ceux-ci.

9. Machine selon la revendication 6, caractérisée en ce que les vérins hydrauliques (35) agissent sur les extrémités respectives des axes du rouleau intérieur (18) en intercalant pour chacun un poinçon (36) et une tige de pression (37) maintenue et guidée dans la cassette (5).

## Claims

1. Machine for the surface treatment of travelling material webs, in particular for embossing patterns in the material webs, with a machine upper part in the form of a cassette, which consists of two lateral roll stands (28, 29; 30) with superposed bearings for two rollers (18, 19), a frame (47) securely connected at the lower end of the roll stands (28, 29; 30) and connecting rods (44, 45) attached between the roll stands towards the upper end, and with a stationary machine underframe (2), in which, in the vertical central planes of the roll stands, hydraulic or pneumatic devices (35) acting on the axle bearings of the lower roller (18) and a roller drive (25, 26) are located, the cassette being releasably attached by means of clamping feet (8, 9, 10) located on both sides at the lower end of the roll stands (28, 29; 30) on one side and three pairs of clamping devices (11 to 14, 38, 39) on the machine underframe (2) for cassettes of optionally different width, on the other side.

2. Machine according to Claim 1, characterised in that the clamping devices (11 to 14, 38, 39) can be actuated hydraulically.

3. Machine according to Claim 1 or 2, characterised in that the rollers consist of an upper roller (19) having a small diameter and a lower roller (18) having a large diameter, that one end of the upper roller is connected by means of a plug connection (27) to the drive (25, 26) and that the other end of the upper roller (19) supports a gear (31; 33), which engages in a gear (32; 34) on the corresponding end of the axle of the lower roller (18).

4. Machine according to one of Claims 1 to 3, characterised in that the clamping feet (8, 9, 10) comprise inclined surfaces (16) and that corresponding inclined surfaces (17) of props (15) of the hydraulic clamping devices (11 to 14, 38, 39) bear on these inclined surfaces (16).

5. Machine according to Claim 4, characterised in that located on the machine underframe (2) in the region remote from the drive (3; 25, 26) are two pairs of clamping devices (11, 13; 14, 38) at a distance apart so that the roll stand (29) of a cassette (5) with the smallest width is held by the inner pair of clamping devices (11, 13) or the roll stand (30) of a cassette (5) with the greatest width is held by the outer pair of clamping devices (14, 38).

6. Machine according to one of the preceding Claims, characterised in that disposed in the two vertical planes passing through the centre of the pairs of clamping devices (11, 13; 14, 38), two hydraulic cylinders are arranged at right angles to the roller axles, so that the inner hydraulic cylinder acts on the roller axle in the Case of the smallest width of the cassette (5) and the outer hydraulic cylinder acts on the roller axle in the case of the greatest width of the cassette.

7. Machine according to Claim 5, characterised in that a hydraulic cylinder is provided, which is arranged to slide parallel to itself in the region between the two planes passing through the centre of the pairs of clamping devices (11, 13; 14, 38).

8. Machine according to one of the preceding Claims, characterised in that a guide roller (20, 21) is respectively arranged to be vertically adjustable on both sides and parallel to and at a distance from the rollers (18, 19).

9. Machine according to Claim 6, characterised in that the hydraulic cylinders (35) act on the respective ends of the roller axle of the lower roller (18) with the interposition respectively of a prop (36) and a push-rod (37) held and guided in the cassette (5).

FIG.1

FIG.2

FIG.3

FIG.4

EP 0 244 492 B1

FIG.5

FIG.6

EP 0 244 492 B1